# EUROPEAN PATENT SPECIFICATION

(11) **EP 3 578 359 B1**
(45) Date of publication and mention of the grant of the patent: **01.05.2024**
(21) Application number: 19178112.9
(22) Date of filing: 04.06.2019
(51) Int. Cl.: B32B 9/02, G09F 3/10, G09F 3/02, C09J 7/38, C09J 7/50

(54) **A WASH-OFF LABEL**
ABWASCHBARES ETIKETT
ÉTIQUETTE LAVABLE

(30) Priority: 08.06.2018 FI 20185529
(43) Date of publication of application: 11.12.2019
(73) Proprietor: UPM Raflatac Oy, 33310 Tampere (FI)
(72) Inventor: Saxberg, Tom, 33230 Tampere (FI); Metsäjoki, Kati, 33960 Pirkkala (FI)
(74) Representative: Berggren Oy

(56) References cited:
- EP-A2- 0 365 998
- WO-A1-2017/051065
- GB-A- 1 281 867
- US-A1- 2005 153 110
- US-A1- 2009 158 632

## Description

### Technical field

The application relates to adhesive labels. Especially to wash-off labels being removable form the surface of an item labelled during subsequent washing process.

### Background

It is general practice to apply a label to a surface of an item to provide decoration, and/or to display information about the product being sold, such as the content of the item, a trade name or logo. Alternative type of labelling technologies and labels are available, such as pressure-sensitive, wet glue, wrap around and shrink sleeve labels. The containers, such as bottles in the beverage industry, are generally re-used or recycled and thus there is a need for labels which are easily removed from the surface of the container during conventional washing processes such as hot dilute caustic soda. Thus, removable labels are an important topic, for example, in beverage industry. Wash-off labels are e.g. disclosed in patent documents US 2009/158632 A1, GB 1 281 867 A, EP 0 365 998 A2, and WO 2017/051065 A1.

### Summary

It is an object of this application to provide a pressure-sensitive label, which is subsequently removable from the surface labelled. Another object is to provide a combination of a label and an item.

According to the invention it is provided a wash-off label comprising layers in the following order: a print layer, a face film layer, a primer layer and an adhesive layer,
- wherein the wash-off label is removable from a surface of an item labelled, 11
- wherein the face film layer comprises thermoplastic polymer, and wherein the primer layer is preferably at least one of the following: thermal wax, cellulose derivative, dextrin, casein, polyvinyl alcohol, polyacrylate with high carboxylic acid content and ethylene acrylic acid;
and the primer layer is configured to detach the adhesive layer from the face film layer through dissolving or dispersing the primer layer between the adhesive layer and the face film layer, when the label is exposed to a washing liquid comprising caustic soda and having temperature in the range of 60-90 °C for equal or less than 5 minutes, and
- the adhesive layer comprises removable pressure sensitive adhesive, which exhibits tackiness, which is arranged to be inactivated or deadened, when the label is exposed to the washing liquid, so as to enable detachment of the label from the surface of the item labelled,
wherein
- an amount of the primer layer is between 0.5 and 4 g/m² and
- an amount of the adhesive layer is between 5 and 20 g/m².

One embodiment provides a combination of a wash-off label and an article, such as a beverage bottle.

One embodiment provides a use of a wash-off label for labelling of a beverage bottle. The beverage bottle may be made of polyethylene terephthalate.

One embodiment provides a method for removing a wash-off label from the surface of labelled article. The method comprises: exposing the labelled item to a washing liquid comprising caustic soda and having temperature in the range of 60-90 °C thereby resulting in removal of the wash-off label from the surface of an item labelled and removal of the adhesive layer from the face film layer. The method may further include collecting the removed adhesive layer from the washing liquid, for example by sieving.

Further embodiments are presented in the dependent claims.

In an example, the primer layer comprises a primer dissolvable or dispersible in the washing liquid.

In an example, the adhesive layer comprises removable water-borne acrylic or water-borne rubber based adhesive.

In an example, the face film layer is oriented and shrinkable.

### Brief description of the drawings

In the following some examples and embodiments of the invention will be described in more detail with reference to appended drawings, in which
- Fig. 1: shows an example embodiment of a printed label,
- Fig. 2: shows an example embodiment of a label laminate comprising die-cut labels,
- Fig. 3: shows an example embodiment of a label removed from the surface of an item labelled.

### Detailed description

The following reference numbers and denotations are used in this application:
- 1: a wash-off label,
- 2: a face film,
- 4: an adhesive layer,
- 5: a primer layer,
- 10: a release liner,
- 100: a label laminate,
- 200: a surface of an item.

In this application term "label" refers to a piece of material, which is used for labelling of an item. Label may be used to identify something. Label may be attached to an article. An article may be a package, such as a bottle. In other words, label is suitable to be applied to a surface of an item to provide decoration, and/or to display information about the product being sold, such as content information, a trade name, a logo, a barcode, or any other graphics.

Labels may be used in wide variety of labelling applications and end-use areas, such as beverage labelling, food labelling, home and personal care product labelling, and labelling of industrial products. The surface of the labelled article may be for example plastic, glass, metal, or paper based. The labelled article may be for example a container, such as a bottle, jar, canister, can, tin or the like. The label may also be applied to semi-rigid or flexible packages used for e.g. packaging of food. Examples of articles include glass bottles, metal bottles, polyethylene terephthalate (PET) bottles, and bottles made of polyolefin, such as high density polyethylene (HDPE) and polypropylene (PP). The label may surround the article, such as a bottle, completely or partially.

Term "wash-off label", also referred to as a washable label, refers to a label removable (detachable) from the surface of the item attached during subsequent washing process. At washing conditions comprising elevated temperatures, the adhesive bond between the label and the item the label is adhered to is weakened. The chemical effect of the washing solution may further promote the weakening of the adhesion. A wash-off label may comprise an adhesive layer sensitive to washing conditions. Wash-off labels may be used in labelling of beverage bottles. For example, beer and wine bottles, such as polyethylene terephthalate (PET) bottles and glass bottles. The bottles may be reused or recycled.

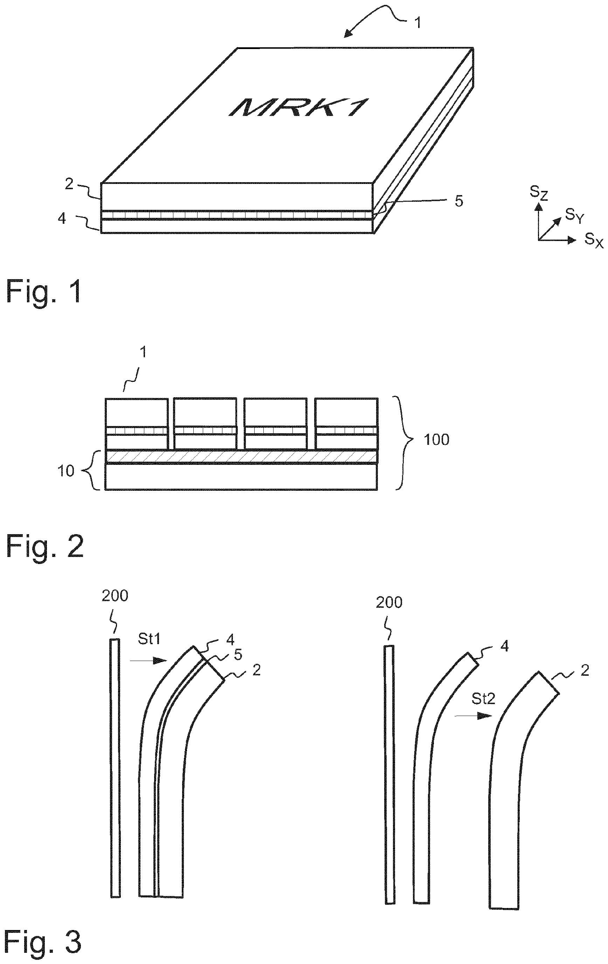

With reference to Fig. 1, a label 1 comprises a face film 2, an adhesive layer 4, and a print layer including at least some graphics MRK1 on a first surface of the face film. A face film may also be referred to as a label film. The graphics may comprise, for example, printed information and/or decoration. A face film comprises a first surface and a second surface. At least one of the surfaces includes graphics. One of the surfaces includes adhesive. The adhesive is used to enable the label to be attached to an item, an article or a container. In addition, the label comprises a primer layer 5 between the adhesive layer 4 and a second surface of the face film 2. The label may further comprise a top coating layer so as to cover the print layer.

With reference to Fig. 2, a label laminate 100 comprises individual labels 1, which are die-cut from the continuous label laminate. The four die-cut labels 1 are attached to a common release liner 10. The release liner has a substrate onto which a release coating layer, such as silicone, is applied. The release coating layer provides a non-adherent surface i.e. low adhesion and release effect against the adhesive layer. The face film and the release liner are typically laminated together having an adhesive layer in between, which laminated structure is referred to as a label laminate. The release liner is used to protect the adhesive layer. It also allows easier handling of the label to up to the point of labelling where the label face layer is dispensed and adhered to a surface of an item. In labelling the release liner is removed and disposed of and the label is attached onto the surface to be labelled through the adhesive layer. Thus, release liners of the label laminates serve one or more useful functions: they are used as a carrier sheet onto which the adhesive may be coated; they protect the adhesive layer during storage and transportation; they provide a support for labels during die-cutting and printing, and ultimately they release from the adhesive leaving it undamaged.

### FACE FILM

A face film may have a monolayer structure. Alternatively it may have a multilayer structure including two or more layers. Multilayer structure may be provided through coextrusion or laminating separate layers together.

A face film comprises or consist of thermoplastic polymer(s). Thermoplastic polymers include polyethylene terephthalate PET, polyvinyl chloride PVC, polystyrene PS, polypropylene PP, polyethylene PE, polylactic acid PLA and cyclic olefin copolymers COC. In an example, a face film comprises polyester, such as polyethylene terephthalate PET or glycol modified polyethylene terephthalate PETG.

A face film may be transparent or clear. From the optical point of view, high transparency of the labels may be preferred. Transparent (clear) labels are substantially transparent to visible light. Transparent no label look appearance of the label is advantageous, for example, in applications where the objects beneath the label, i.e. the surface of a bottle, should be visible through the label. Clarity of the face film and a label comprising said face film can be measured and evaluated by the haze values. The haze of the face film may be lower than 25%, or lower than 10%, for example 2-6%, or 4-5%. Haze is tested according to standard ASTM D1003. When the haze of the label is low also the adhesives used should be clear or transparent.

Alternatively, a face film may be opaque and/or white. In an embodiment of an opaque face film, the face comprises additive to provide a desired colour. An additive may comprise one or more pigments or inorganic fillers, for example titanium dioxide, calcium carbonate and/or combination of those. In a multilayer film structure, the pigment may be included in one or more of the layers. As an example, a black face film is provided with additive carbon black. An opaque face layer may have an opacity of at least 70%, or at least 75%, or at least 80% when measured according to the standard ISO 2471. Opacity may be 70-95%, or preferably 70-80%. Alternatively, opacity may be less than 12%, when measured according to the standard ISO 2471. A face film may be oriented, such as monoaxially or biaxially oriented. The oriented film may be annealed so as to release the internal stresses created during orientation. Alternatively, the oriented face film may be non-annealed so that the internal stresses provided during stretching are locked into the film. Due to the locked internal stresses the film is able to shrink at elevated temperatures, such as when the film is applied to a washing liquid having temperature between 60-90 °C. Shrinkability of the face film may enhance the detachment of the label in the subsequent washing process and removal of the label form the surface labelled.

### ADHESIVE LAYER

A label can be affixed to the surface of an item (article) through an adhesive layer so as to form a labelled item. Adhesive layer provides adhesion i.e. adheres or bonds the label to the surface of the item. The adhesive layer of the label should have a suitable adhesion i.e. tack (stickiness) in order to stick to an item during labelling process. Tack is the property of adhesive that allows the immediate formation of a bond on contact with another surface. The tackiness is needed at the point the label is attached to an item. The optimum adhesion between two materials depends on, for example, the wetting and surface energy of the materials.

An adhesive layer may be a continuous coating covering 100% of the face layer surface. Alternatively, it may be applied discontinuously as spots or strips covering less than 100% of the face layer surface. For example, the adhesive may cover between 10 to 90% of the total area of the face layer. Reduced amount of adhesive may have effect on reducing the time needed for the subsequent removal of the label during washing process from the surface of the item attached.

An adhesive layer may have a thickness in the range of about 5-40 µm, or in the range of about 8-20 µm. For example, the thickness of the adhesive layer is in the range of about 5-15 µm or 5-12 µm. The amount of the adhesive, in dry weight, is in the range of 5-40 g/m², or 8-20 g/m². The amount of the adhesive may be preferably less than 20 g/m², or equal or less than 12 g/m². For example, the amount of the adhesive is between 5 and 20 g/m² or between 5 and 12 g/m². High enough amount of adhesive, such as between 5 and 20 g/m², is required so as to enable reliable attachment of the label onto the surface of an item. The high amount of adhesive provides good adherence also towards the rough surfaces labelled.

According to the invention, an adhesive layer adjacent to the surface of the item labelled comprises or consists of a pressure sensitive adhesive(s) (PSA). A label comprising an adhesive layer of pressure sensitive adhesive may be referred to as a pressure sensitive adhesive (PSA) label. Pressure sensitive adhesive labels may also be referred to as self-adhesive labels. The labels consisting of PSA can be adhered to most surfaces through an adhesive layer without the use of a secondary agent, such as a solvent, or heat to strengthen the bond. The PSA forms a bond when pressure is applied onto the label at ambient temperature (e.g. between 15 and 35 °C), adhering the label to the item to be labelled. The adhesive layer may comprise at least one of the following: water based (water-borne) PSA, solvent based PSA and solid PSA. Solid PSAs are melted during application to the surface to be coated and may also be referred to as a hot-melt PSAs.

When a permanent adhesive label is adhered to a substrate, the adhesive bond to the substrate grows over time, and the label cannot be removed without damaging the face layer and/or the substrate labelled, and/or without leaving an adhesive residue on the substrate. In contrast, an adhesive bond of a removable adhesive remains substantially constant over time, and the removable adhesive label can be detached from a substrate labelled without leaving adhesive residues on the substrate.

According to the invention, the pressure-sensitive adhesive is removable.

Removable adhesive exhibits tackiness, which is arranged to be inactivated or deadened in the washing process so as to enable detachment of the label from the surface labelled in the washing process. The adhesive may be re-dispersible.

According to an embodiment, an adhesive layer may comprise solvent-based acrylic adhesive; UV curable acrylic adhesive; hot-melt rubber based or hot-melt acrylic based adhesive.

According to an embodiment, an adhesive layer comprises removable water-borne acrylic or removable water-borne rubber based adhesive. Removable adhesive may comprise ethylene vinyl acetate EVA.

### PRIMER LAYER

A primer layer 5 between the face film and the adhesive enables separation of the adhesive from the face film. In other words, a primer layer is configured to detach the adhesive layer form the face film layer. Removal of the adhesive from the face film enables more reliable recycling process. The face film material is more easily conveyed in the washing and separation process since sticking of the face film due to the adhesive layer is eliminated. The removed face layer without the adhesive layer has effect on preventing malfunctions of the recycling process.

A primer layer comprises or consist of a primer sensitive to a temperature of the washing process. The temperature of the washing liquid may be between 60 and 90 degrees C, or between 65 and 85 degrees C. Alternatively or in addition a primer layer comprises or consist of a primer sensitive to an alkaline washing liquid. Washing liquid may be 1-4%, preferably 1-2% alkaline water i.e. alkaline aqueous solution comprising caustic soda, such as sodium hydroxide. A primer layer comprising or consisting of a primer sensitive to a temperature of the washing process and/or alkaline washing liquid may dissolve in the liquid. Alternatively, the primer layer may be dispersible in the washing liquid. The primer layer may be dispersed or dissolved in less than 5 minutes. Dissolving or dispersion of the primer layer enables detachment of the adhesive layer from the face film layer.

Primer may be one of the following: thermal wax, cellulose derivative, such as carboxy methyl cellulose CMC or modified starch, dextrin, casein, polyvinyl alcohol PVA, ethylene acrylic acid EAA, and acrylic polymer (polyacrylate) with high carboxylic acid content. High carboxylic acid content of the acrylic polymer may provide controlled water solubility.

An amount of the primer layer is equal or less than 4 g/m². According to the invention, the amount of primer resin is in the range of 0.5-4 g/m², or 1-2 g/m². Due to the small amount of less than 4 g/m² of the primer, the washing liquid is not highly contaminated with the dissolving primer layer. Contamination of the washing liquid with the primer layer is minor when compared to, for example, the case that the adhesive layer having an amount of between 5 and 15 g/m², would be dissolvable. Thickness of the primer layer may be from 0.1 to 6 microns.

The primer layer may be coextruded with the plastic face film layer.

Alternatively it may be separately applied, for example by roll coating, onto the surface of the face film.

Due to the primer layer, use of a water soluble adhesive in the wash-off label structure enabling the detachment of the label from the item and the adhesive from the face film layer during the washing process, may be avoided. Removal of the water soluble adhesive from the washing liquid may be difficult. Alternatively, the contaminated washing liquid need to be replaced. Instead, removing the separated non-dissolvable adhesive layer may be provided easily, for example through sieving, and the same washing liquid may be used for a longer period of time. Even if the primer layer would be dissolvable, the washing liquid would be less contaminated due to the smaller amount of primer when compared to the greater amount of adhesive.

### LABEL REMOVAL

Labelled items, such as bottles, are generally reused or recycled several times. Preferably the labels with ink and pigments are detached from the labelled item and separated from other recyclable plastic fractions, such as crushed PET bottles. Easy removal of the labels would permit an efficient and cost-effective recycling process of the items.

In the washing process the label is detached from the labelled item, for example from the surface of the bottle. During washing process, the label is exposed to a heated washing liquid. In washing process comprising heated aqueous washing solution, the adhesion force of the adhesive layer is decreased allowing detachment of the adhesive label from the surface of the item attached. In addition, the face layer, such as face layer having shrink capability under washing conditions, may enhance the separation of the labels from the surface of the item labelled.

Referring to Fig. 3, removal process of a label from the surface of an item includes the following steps: 1^{st} step St1 including detachment of the adhesive layer 4 form the surface of the item 200 so as to enable removal of the label structure. The detachment may be achieved, for example due to the deadening or inactivation of the adhesive layer in the washing liquid. Alternatively, the face layer may create forces sufficient to overcome the adhesion force of the adhesive layer and thus enabling the removal. Preferably, the label is detached from the surface labelled without leaving adhesive residues on the surface from which the label is removed. The adhesive layer may be adhered to the face layer during removal of the label from the surface of an item. Further the removal process includes 2^{nd} step St2, wherein the adhesive layer 4 is detached from the face film 2 through dissolving of the primer layer 5 between the adhesive and the face film. The separated adhesive layer may be removed from the washing liquid, for example through sieving. Also separated face film may be collected.

The washing process comprises an elevated temperature and an alkaline washing solution. Washing conditions of recyclable containers, such as glass containers, comprise temperatures in the range of 60-90 °C (degrees C), or 65-85 °C, or preferably at temperatures above 77 °C in aqueous solution. For polyester or plastic containers, the washing temperature may be 65-75 °C, or even higher such as about 80 °C. Washing liquid usually comprises caustic soda, for example sodium hydroxide. The washing liquid may be 1-4%, preferably 1-2% alkaline water. In one example the labelled items go into a pre-wash chamber at 50 °C for about one minute before they go into the washing chamber at 80 °C.

## Claims

1. A wash-off label comprising layers in the following order: a print layer, a face film layer, a primer layer and an adhesive layer,
- wherein the wash-off label is removable from a surface of an item labelled,
- wherein the face film layer comprises thermoplastic polymer, and
- wherein the primer layer is preferably at least one of the following: thermal wax, cellulose derivative, dextrin, casein, polyvinyl alcohol, polyacrylate with high carboxylic acid content and ethylene acrylic acid, and the primer layer is configured to detach the adhesive layer from the face film layer through dissolving or dispersing the primer layer between the adhesive layer and the face film layer, when the label is exposed to a washing liquid comprising caustic soda and having temperature in the range of 60-90 °C for equal or less than 5 minutes, and
- the adhesive layer comprises removable pressure sensitive adhesive, which exhibits tackiness, which is arranged to be inactivated or deadened, when the label is exposed to the washing liquid, so as to enable detachment of the label from the surface of the item labelled,
wherein
- an amount of the primer layer is between 0.5 and 4 g/m², and
- an amount of the adhesive layer is between 5 and 20 g/m².

2. A wash-off label according to claim 1, wherein the primer layer comprises a primer dissolvable or dispersible in the washing liquid.

3. A wash-off label according to any of the previous claims, wherein the adhesive layer comprises removable water-borne acrylic or removable water-borne rubber based adhesive.

4. A wash-off label according to any of the previous claims, wherein the face film layer consists of thermoplastic polymer(s).

5. A wash-off label according to any of the previous claims, wherein the face film layer is oriented and shrinkable.

6. A wash-off label according to any of the previous claims, wherein
- the adhesion force of the adhesive layer is decreased allowing detachment of the label from the surface of the item labelled.

7. A wash-off label according to any of the previous claims, wherein the adhesive layer covers between 10 to 90% of the total area of the face film layer.

8. An article comprising a wash-off label according to any of the claims 1-7 adhered to the surface of the article.

9. An article according to claim 8, wherein the article is a beverage bottle.

10. Use of a wash-off label according to any of the claims 1-7 for labelling of a beverage bottle.

11. Use of a wash-off label according to claim 10, wherein the beverage bottle is made of polyethylene terephthalate.

12. A method for removing a wash-off label according to any of the claims 1-7 from the surface of labelled item, the method comprising:
- exposing the labelled item to a washing liquid comprising caustic soda and having temperature in the range of 60-90 °C thereby resulting in removal of the wash-off label from the surface of an item labelled and removal of the adhesive layer from the face film layer.

## Patentansprüche

1. Abwaschbares Etikett, umfassend Schichten in der folgenden Reihenfolge: eine Druckschicht, eine Oberflächenfolienschicht, eine Primer-Schicht und eine Haftschicht,
- wobei das abwaschbare Etikett von der Oberfläche eines etikettierten Artikels entfernbar ist,
- wobei die Oberflächenfolienschicht thermoplastisches Polymer umfasst, und
- wobei die Primer-Schicht bevorzugt zumindest eines der folgenden ist:
Thermowachs, Zellulosederivat, Dextrin, Casein, Polyvinylalkohol, Polyacrylat mit hohem Carbonsäuregehalt und Ethylenacrylsäure, und die Primer-Schicht dazu konfiguriert ist, die Haftschicht von der Oberflächenfolienschicht durch Auflösen oder Dispergieren der Primer-Schicht zwischen der Haftschicht und der Oberflächenfolienschicht abzulösen, wenn das Etikett einer Waschflüssigkeit ausgesetzt wird, welche Ätznatron umfasst und einen Temperatur in dem Bereich von 60-90 °C während gleich oder kleiner als 5 Minuten aufweist, und
- die Haftschicht entfernbaren druckempfindlichen Klebstoff umfasst, welcher Klebrigkeit zeigt, welche dazu eingerichtet ist, deaktiviert oder gedämpft zu werden, wenn das Etikett der Waschflüssigkeit ausgesetzt wird, um Ablösung des Etiketts von der Oberfläche des etikettierten Artikels zu ermögliche,
wobei
- eine Menge der Primer-Schicht zwischen 0,5 und 4 g/m² beträgt, und
- eine Menge der Haftschicht zwischen 5 und 20 g/m² beträgt.

2. Abwaschbares Etikett nach Anspruch 1, wobei die Primer-Schicht einen Primer umfasst, welcher in der Waschflüssigkeit aufgelöst oder dispergiert werden kann.

3. Abwaschbares Etikett nach einem der vorstehenden Ansprüche, wobei die Haftschicht entfernbaren wasserbasierten acrylbasierten oder entfernbaren wasserbasierten kautschukbasierten Klebstoff umfasst.

4. Abwaschbares Etikett nach einem der vorstehenden Ansprüche, wobei die Oberflächenfolienschicht aus thermoplastischem Polymer(en) besteht.

5. Abwaschbares Etikett nach einem der vorstehenden Ansprüche, wobei die Oberflächenfolienschicht ausgerichtet und schrumpffähig ist.

6. Abwaschbares Etikett nach einem der vorstehenden Ansprüche, wobei
- die Haftkraft der Haftschicht verringert ist, um Ablösung des Etiketts von der Oberfläche des etikettierten Artikels zu erlauben.

7. Abwaschbares Etikett nach einem der vorstehenden Ansprüche, wobei die Haftschicht zwischen 10 und 90 % der Gesamtfläche der Oberflächenfolienschicht bedeckt.

8. Artikel, umfassend ein abwaschbares Etikett nach einem der Ansprüche 1-7, welches auf der Oberfläche des Artikels haftet.

9. Artikel nach Anspruch 8, wobei der Artikel eine Getränkeflasche ist.

10. Verwendung eines abwaschbaren Etiketts nach einem der Ansprüche 1-7 zum Etikettieren einer Getränkeflasche.

11. Verwendung eines abwaschbaren Etiketts nach Anspruch 10, wobei die Getränkeflasche aus Polyethylenterephthalat hergestellt ist.

12. Verfahren zum Entfernen eines abwaschbaren Etiketts nach einem der Ansprüche 1-7 von der Oberfläche eines etikettierten Artikels, wobei das Verfahren umfasst:
- Aussetzen des etikettierten Artikel einer Waschflüssigkeit, welche Ätznatron umfasst und eine Temperatur in dem Bereich von 60-90 °C aufweist, dadurch Entfernung des abwaschbaren Etiketts von der Oberfläche eines etikettierten Artikels und Entfernung der Haftschicht von der Oberflächenfolienschicht ergebend.

## Revendications

1. Étiquette lavable comprenant des couches dans l'ordre suivant : une couche d'impression, une couche de film facial, une couche de primaire et une couche adhésive,
- dans laquelle l'étiquette lavable peut être décollée d'une surface d'un article étiqueté,
- dans laquelle la couche de film facial comprend un polymère thermoplastique, et
- dans laquelle la couche de primaire est de préférence au moins l'un des éléments suivants : une cire thermique, un dérivé de cellulose, une dextrine, une caséine, un alcool polyvinylique, un polyacrylate à haute teneur en acide carboxylique et un éthylène-acide acrylique, et la couche de primaire est configurée pour détacher la couche adhésive de la couche de film facial en dissolvant ou en dispersant la couche de primaire entre la couche adhésive et la couche de film facial, lorsque l'étiquette est exposée à un liquide de lavage comprenant de la soude caustique et ayant une température dans la plage de 60 à 90 °C pendant une durée égale ou inférieure à 5 minutes, et
- la couche adhésive comprend un adhésif autocollant sensible à la pression décollable, qui présente un caractère collant, qui est agencé pour être inactivé ou amorti, lorsque l'étiquette est exposée au liquide de lavage, de manière à permettre le détachement de l'étiquette de la surface de l'article étiqueté,
dans laquelle
- une quantité de couche de primaire est comprise entre 0,5 et 4 g/m², et
- une quantité de couche adhésive est comprise entre 5 et 20 g/m².

2. Étiquette lavable selon la revendication 1, dans laquelle la couche de primaire comprend un primaire soluble ou dispersable dans le liquide de lavage.

3. Etiquette lavable selon l'une quelconque des revendications précédentes, dans laquelle la couche adhésive comprend un adhésif acrylique décollable à base d'eau ou de caoutchouc décollable à base d'eau.

4. Étiquette lavable selon l'une quelconque des revendications précédentes, dans laquelle la couche de film facial est constituée d'un ou de plusieurs polymère(s) thermoplastique(s).

5. Étiquette lavable selon l'une quelconque des revendications précédentes, dans laquelle la couche de film facial est orientée et rétractable.

6. Étiquette lavable selon l'une quelconque des revendications précédentes, dans laquelle
- la force d'adhérence de la couche adhésive est diminuée permettant le décollement de l'étiquette de la surface de l'article étiqueté.

7. Étiquette lavable selon l'une quelconque des revendications précédentes, dans laquelle la couche adhésive couvre entre 10 et 90 % de la surface totale de la couche de film facial.

8. Article comprenant une étiquette lavable selon l'une quelconque des revendications 1 à 7 collée à la surface de l'article.

9. Article selon la revendication 8, dans lequel l'article est une bouteille de boisson.

10. Utilisation d'une étiquette lavable selon l'une quelconque des revendications 1 à 7 pour l'étiquetage d'une bouteille de boisson.

11. Utilisation d'une étiquette lavable selon la revendication 10, dans laquelle la bouteille de boisson est constituée de polyéthylène téréphtalate.

12. Procédé de décollement d'une étiquette lavable selon l'une quelconque des revendications 1 à 7 de la surface d'un article étiqueté, le procédé comprenant :
- l'exposition de l'article étiqueté à un liquide de lavage comprenant de la soude caustique et ayant une température dans la plage de 60 à 90 °C ce qui entraîne le décollement de l'étiquette lavable de la surface d'un article étiqueté et le décollement de la couche adhésive de la couche de film facial.
